(19) Europäisches Patentamt
European Patent Office
Office européen des brevets

(11) EP 1 549 074 A1

(12) **EUROPEAN PATENT APPLICATION**
published in accordance with Art. 158(3) EPC

(43) Date of publication:
**29.06.2005 Bulletin 2005/26**

(21) Application number: **02769857.0**

(22) Date of filing: **23.09.2002**

(51) Int Cl.[7]: **H04N 7/26**

(86) International application number:
**PCT/CN2002/000673**

(87) International publication number:
**WO 2004/010702 (29.01.2004 Gazette 2004/05)**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **22.07.2002 CN 02125274**

(71) Applicant: **Institute of Computing Technology Chinese Academy of Sciences
Haidian District, Beijing 100080 (CN)**

(72) Inventors:
- **GAO, Wen Dig. Tech. Lab. Inst. Comp. Tech., CAS
Beijing 100080 (CN)**
- **MA, Siwei Dig. Tech. Lab. Inst. Comp. Tech., CAS
Beijing 100080 (CN)**
- **LU, Yan Dig. Tech. Lab. Inst. Comp. Tech., CAS
Beijing 100080 (CN)**

(74) Representative: **Tomlinson, Edward James
Frohwitter
Patent- und Rechtsanwälte
Possartstrasse 20
81679 München (DE)**

# (54) A BIT-RATE CONTROL METHOD AND DEVICE COMBINED WITH RATE-DISTORTION OPTIMIZATION

(57) In the invention, a rate distortion optimization (RDO) based rate control method is comprised of following steps: first, does bit allocation for every frame in a GOP; then based on the allocated bits, a predicted quantization parameter is used to do the first rate distortion optimization mode selection for every macroblock in the current frame and calculate the final quantization parameter for rate control; an apparatus for the rate distortion optimization based rate control includes following modules: a video coding encoder module(for example, H.264/JVT processing module), rate distortion optimization based macroblock mode selection and adaptive quantization module, virtual buffer, and global complexity estimation module. As RDO and rate control are considered together in the invention, the RDO based rate control scheme can achieve better coding performance while with accurate target bit rate control. The invention also provides an efficient way for resolving the rate control problem on JVT standard.

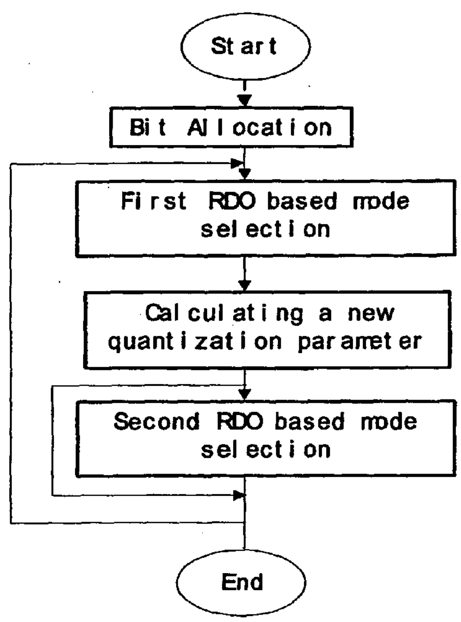


Figure 1 is an apparatus for the invention.

EP 1 549 074 A1

Printed by Jouve, 75001 PARIS (FR)

## Description

### BACKGROUND OF THE INVENTION:

In this invention, a rate distortion optimization based rate control method and implementation is declared. It is suitable for video streaming, and belongs to digital video audio coding standardization and digital media processing area.

### BACKGROUND OF THE INVENTION:

Advanced video coding techniques are important for multimedia storage and transmission. For this reason, many video coding standards have been standardized by ISO MPEG and ITU. H.264 is the latest video coding standard. H.264/AVC standard jointly developed by ISO and ITU-T-Joint Video Team (JVT), also known as MPEG-4 Part 10 and H.264 in the H.26x serial standards, has substantially outperformed the previous video coding standards by utilizing a variety of temporal and spatial predictions.
Rate control is an important technique although it does not belong to the normative part in video coding standards. However, without rate control any video coding scheme would be practically useless in many applications because the client buffer may often under-flow and over-flow when a channel used to deliver the compressed stream is of constant bandwidth.
Therefore, every video coding standard has its own rate control technique, for example, TM5 for MPEG-2 and TMN8 for H.263.
Rate distortion optimization is an important technique for video coding. It has been used in the recent JVT encoder. RDO can select an optimal motion vector and mode for a macroblock, and achieve a good tradeoff between rate and distortion.
Yet the RDO used in H.264 test model makes it difficult to adopt the existing rate control techniques. Because rate control usually requires a pre-determined set of motion vectors and coding modes to select the quantization parameter, whereas RDO requires a pre-determined quantization parameter to select motion vectors and coding modes. On the other hand, as the complexity ratio among coded intra, inter, and bidirectional prediction frame has changed, the bit allocation model and adaptive quantization scheme should also be improved. So the traditional bit allocation model and adaptive quantization scheme must be improved. The invention is a method and apparatus for rate distortion optimization based rate control. The invention can be used for video streaming, transmission, and storage coding.

### SUMMARY OF THE INVENTION:

The invention is to provide a method and apparatus of rate control for a video encoder, in which rate distortion optimization technique is used to improve coding efficiency. The method can guarantee decoded picture quality while with accurate target bit rate control. The invention also provides an efficient way to resolve the rate control problem on JVT encoder.
The invention is composed of following steps:

Step 1, does bit allocation for every picture in the current GOP;
Step 2, does rate distortion optimization mode selection for every macroblock in the picture, and calculate a quantization parameter for the macroblock:

As said in Step 1, before coding a GOP, the bits allocated to a picture is adjusted according to the average frame size. The average frame size is calculated as:

$R/F = R \div F$, here, $R$ is the target bit rate. $F$ is the picture rate. $R/F$ is the average picture size.

Further bit allocation adjustment is done as follows:

$$T_i = \max\left\{\frac{R}{1+\frac{N_pX_p}{K_pX_i}+\frac{N_bX_b}{K_bX_i}}, \frac{bit_rate}{8\times picture_rate}\right\}$$

$$T_b = \max\left\{\frac{R}{N_b + \frac{N_p K_b Xp}{K_p X_b}}, \frac{bit_rate}{8 \times picture_rate}\right\}$$

$$T_p = \max\left\{\frac{R}{N_p + \frac{N_b K_p X_b}{K_b X_p}}, \frac{bit_rate}{8 \times picture_rate}\right\}$$

here, $T_I$, $T_p$ and $T_b$ is the bits allocated to I, P or B frame respectively. $N_i$, $N_p$ and $N_b$ is the number of remained none coded I, P or B frames in the GOP respectively. $X_i$, $X_p$ and $X_b$ is the global complexity estimation for I, P or B frame respectively and is defined as the multiplier between the coded bits and average quantization parameter for the frame.

*bit_rate* is the target bit rate. *picture_rate* is the frame rate.

$K_p$ and $K_b$ are constants. *Kp,* $K_b$ means the complexity ratio between P, B frame and I frame respectively.

*R* is the remained bits for the GOP, and after coding a picture it is updated as follows:

$$R = R - S_{i,p,b}$$

$S_{i,p,b}$ is the coded bits for the current frame.

Before coding a GOP, the remaining bits for the current GOP is initialized as:

$$R = G + R_{prev}$$

$$G = bit_rate \times N \div picture_rate$$

here, *R* is the remained bits for the current GOP.

*N* is the number of frames in current GOP.

*G* is the number of bits for a GOP.

$R_{prev}$ is the remained bits for the previous GOP. For the first GOP, $R_{prev}$=0.

*bit_rate* is the target bit rate.

*picture_rate* is the frame rate.

$X_i$, $X_p$ and $X_b$ are initialized as:

$$X_i = a \times bit_rate$$

$$X_p = b \times bit_rate$$

$$X_b = c \times bit_rate$$

here *a, b* and *c* are constants, and take the value 100/115-160/115, 20/115-60/115, /115-42/115 respectively.

*bit_rate* is the target bitrate.

The said Step 2 includes at least one time rate distortion optimization mode selection, that is to say: does mode selection for the current macroblock while using the quantization parameter of the previous macroblock. The mode which minimizes the following expression is selected as the mode for current macroblock:

$$D(s,c,MODE|QP)+\lambda_{MODE}R(s,c,MODE|QP)$$

here, *s* is the luma value of the original macroblock. *c* is the luma value of the reconstructed macroblock. $\lambda_{MODE}$ is the lagrangian constant.

For I/P frame,

$$\lambda_{MODE} = 0.85 \times 2^{Q_{m-1}/3};$$

For B frame,

$$\lambda_{MODE} = 4 \times 0.85 \times 2^{Q_{m-1}/3}.$$

*D(s,c,MODE|QP)* is used to evaluate the distortion of the current macroblock coded with mode *MODE*.

*R(s,c,MODE|QP)* is the bits used to code the macroblock with mode *MODE.*

*QP* is the quantization parameter for the current macroblock

for motion estimation in P or B frame, the motion vector minimizing following expression is selected for the current macroblock:

$$J(m,\lambda_{MOTION}) = SA(T)D(s,c(m)) + \lambda_{MOTION}\, R(m - p)$$

here, *D(s,c(m))* is used to evaluate the distortion from motion compensation.

*SA*(*T*) *D* is sum of the absolute difference (or after Hadmard transform) for the macroblock.

*R(m-p)* is the bits used to code the motion vector.

*s* is the luma value of the current macroblock in the original frame.

*c* is the luma value in reference picture.

*m* is the motion vector.

*p* is the predicted motion vector.

$\lambda_{MOTION}$ is the lagrangian constant and $\lambda_{MOTION} = \sqrt{\lambda_{MODE}}$.

$\lambda_{MODE}$ is the lagrangian constant.

After the first rate distortion mode selection, the rate control scheme further includes: Calculating a new quantization parameter and adjusting it according to the macroblock activity and buffer status.

For adjusting quantization parameter for the current macroblock, the sum of the absolute difference is used as the macroblock activity estimation measure after first rate distortion mode selection. The macroblock activity is calculated as:

$$act_m = \sum_{i,j} |s(i,j) - c(i,j)| \qquad N_act_m = \frac{(2 \times act_j) + avg_act}{act_j + (2 \times avg_act)}$$

here, i is the horizontal position of the pixel in the current macroblock. *j* is the vertical position of the pixel in the current macroblock. $N_act_m$ is the activity of the current macroblock. *s*(*i,j*) is the luma value of the original pixel(*i,j*), *c* (*i,j*) is the prediction value of pixel(*i,j*).*avg_act* is the average $act_m$ in the previous coded picture which is coded with the same type as current picture. $act_m$ is the sum of the absolute difference after motion compensation or intra prediction.

The virtual buffer for rate control is set up for mapping the virtual buffer occupancy to macroblock quantization parameter. The macroblock quantization parameter is calculated as:

$$Q_m = \left( \frac{d_m^n \times 31}{r} \right) \times N_act_m$$

$$r = 2 \times bit_rate / picture_rate$$

$$d_m^n = d_0^n + B_{m-1} - T_n \times (m - 1) / MB_CNT$$

here, $Q_m$ is the quantization parameter of current macroblock.

$d_m^n$ is the current buffer occupancy, and it equals $d_m^I$, $d_m^p$, and $d_m^b$ for I, P, B frame respectively.

$B_{m-1}$ is the bits used to code previous macroblock.

$d_0^n$ is the initial buffer occupancy for current frame. $n$ is i,p or b, corresponding to $d_0^i$,$d_0^p$,and $d_0^b$.

$r$ is the size of virtual buffer occupancy.

The final buffer occupancy is $d_m^i$, $d_m^p$, $d_m^b$ for i, p, or b frame respectively, here $m=MB_CNT$. $MB_CNT$ is the total number of macroblocks in a frame.

When coding the first frame, the buffer is initialized as:

$$d_0^i = 10 \times r / 31$$

$$d_0^p = K_p \times d_0^i$$

$$d_0^b = K_b \times d_0^i$$

here r is the virtual buffer size; $d_0^i$,$d_0^p$, and $d_0^b$ is the initial virtual buffer occupancy for i, p, or b frame. $K_p$ is the complexity ratio between I and P frame; $K_b$ is the complexity ratio between I and B frame.

After quantization parameter decision for the current macroblock, the RDO based rate control also includes a second RDO mode selection. That is to say, the decided quantization parameter for the current macroblock will be used to do RDO mode selection again.

The mode which minimizes the following expression will be selected as the mode for the current macroblock:

$$D(s, c, MODE \mid QP) + \lambda_{MODE} R(s,c, MODE \mid QP)$$

here, $s$ is the luma value of the original macroblock. $c$ is the luma value of the reconstructed macroblock. $\lambda_{MODE}$ is the lagrangian constant.

For I/P frame,

$$\lambda_{MODE} = 0.85 \times 2^{Q_{m-1}/3};$$

For B frame,

$$\lambda_{MODE} = 4 \times 0.85 \times 2^{Q_{m-1}/3}.$$

$D(s,c,MODE|QP)$ is used to evaluate the distortion of the current macroblock after it is coded.

$R(s,c,MODE|QP)$ is the bits used to code the macroblock with mode $MODE$.

$QP$ is the quantization parameter for current macroblock. For motion estimation in P or B frame, the motion vectors minimizing following expression are selected as the motion vectors for the current macroblock:

$$J(\mathrm{m},\lambda_{MOTION}) = SA(T)D(s, c(m)) + \lambda_{MOTION}\, R(\mathrm{m} - \mathrm{p})$$

here, *D(s,c(m))* is used to evaluate the distortion from motion compensation.
*SA(T) D* is the sum of the absolute difference (or after Hadmard transform) for the macroblock.
*R(m-p)* is the bits used to code the motion vector.
*s* is the luma value of the current macroblock in the original frame.
*c* is the luma value in reference picture.
*m* is the motion vector.
*p* is the predicted motion vector.
$\lambda_{MOTION}$ is the lagrangian constant and $\lambda_{MOTION} = \sqrt{\lambda_{MODE}}$.
$\lambda_{MODE}$ is the lagrangian constant.

As shown in Figure 2, a rate distortion optimization based rate control implementation includes following modules: JVT processing module, rate distortion optimization based macroblock mode selection module, virtual buffer, and global complexity estimation module.

JVT processing module receives the input frame data, and it is connected with RDO mode selection module, virtual buffer module and global complexity estimation module;

RDO mode selection module is connected with virtual buffer and global complexity estimation module. It receives the input signal from JVT processing module, and processes it based on the virtual buffer module and global complexity module status. In the last, the output signal is sent back to JVT processing module, JVT module will output the final coded macroblock.

For bit allocation, before coding a GOP, does bit allocation for the pictures in the GOP with the average picture size; the average picture size is calculated as:

*R/F* = *R*÷*F*, here, *R* is the target bit rate. *F* is the picture rate. *R/F* is the average picture size.

The bit allocation adjustment in the coded GOP is shown as follows:

$$T_b = \max\left\{\frac{R}{N_b + \frac{N_p K_b Xp}{K_p X_b}}, \frac{bit_rate}{8 \times picture_rate}\right\}$$

$$T_p = \max\left\{\frac{R}{N_p + \frac{N_b K_p X_b}{K_b X_p}}, \frac{bit_rate}{8 \times picture_rate}\right\}$$

$$T_i = \max\left\{\frac{R}{1 + \frac{N_p X_p}{K_p X_i} + \frac{N_b X_b}{K_b X_i}}, \frac{bit_rate}{8 \times picture_rate}\right\}$$

here, $T_I$, $T_p$ and $T_b$ is the bits allocated to I, P or B frame respectively. $N_i$, $N_p$ and $N_b$ is the remained none coded I, P or B frames in the GOP respectively. $X_i$, $X_p$ and $X_b$ is the global complexity estimation for the I, P or B frame respectively and is defined as the multiplier between coded bits and average quantization parameter for the frame.

*bit_rate* is the target bit rate. *picture_rate* is the frame rate.

$K_p$ and $K_b$ are constants. $K_p$, $K_b$ means the complexity ratio between P, B frame and I frame respectively.

*R* is the remained bits for the GOP, and after coding a picture it is updated as follows:

$$R = R - S_{i,p,b}$$

$S_{i,p,b}$ is the coded bits for the current frame.

Before coding a GOP, the remaining bits for the current GOP is initialized as follows:

$$R = G + R_{prev}$$

$$G = bit_rate \times N \div picture_rate$$

here, $R$ is the remained bits for the current GOP.

$N$ is the number of frames in current GOP.

$G$ is the number of bits for a GOP;

$R_{prev}$ is the remained bits for the previous GOP. For the first GOP, $R_{prev}$=0;

*bit_rate* is the target bit rate;

*picture_rate* is the frame rate;

$X_i$, $X_p$ and $X_b$ are initialized as:

$$X_i = a \times bit_rate$$

$$X_p = b \times bit_rate$$

$$X_b = c \times bit_rate$$

here *a, b* and *c* are constants and take the value of 100/115-160/115, 20/115-60/115, 10/115-42/115 respectively; *bit_rate* is the target bitrate.

Do the mode selection for the current macroblock while using the quantization parameter of previous macroblock as a prediction value for the current macroblock. The mode minimizes the following expression is selected as the initial coding mode for the current macroblock:

$$D(s, c, MODE \mid QP) + \lambda_{MODE} R(s, c, MODE \mid QP)$$

here, $s$ is the luma value of the original macroblock. $c$ is the luma value of the reconstructed macroblock. $\lambda_{MODE}$ is the lagrangian constant.

For I/P frame,

$$\lambda_{MODE} = 0.85 \times 2^{Q_m - 1/3};$$

For B frame,

$$\lambda_{MODE} = 4 \times 0.85 \times 2^{Q_m - 1/3}.$$

$D(s,c,MODE|QP)$ is used to evaluate the distortion of the current macroblock after it is coded.

$R(s,c,MODE|QP)$ is the bits used to code the macroblock with mode *MODE.*

$QP$ is the quantization parameter for current macroblock.

For motion estimation in P or B frame, the motion vectors minimizing following expression are selected as the motion vectors for the current macroblock:

$$J(\mathrm{m},\lambda_{MOTION}) = SA(T)D(s,c(\mathrm{m})) + \lambda_{MOTION}\,R(\mathrm{m} - \mathrm{p})$$

here, *D(s,c(m))* is used to evaluate the distortion from motion compensation.
SA(T) D is sum of the absolute difference (or after Hadmard transform) for the macroblock.
*R(m-p)* is the bits used to code the motion vector.
*s* is the luma value of the current macroblock in the original frame.
*c* is the luma value in reference picture.
*m* is the motion vector.
*p* is the predicted motion vector.
$\lambda_{MOTION}$ is the lagrangian constant and $\lambda_{MOTION} = \sqrt{\lambda_{MODE}}$.
$\lambda_{MODE}$ is the lagrangian constant.

After the first rate distortion mode selection, the output of RDO mode selection module is sent to JVT processing module. A new quantization parameter will be calculated by the JVT processing module. The quantization parameter is adjusted according to the macroblock activity.

After first rate distortion mode selection, the sum of the absolute difference is used as the macroblock activity measure for the current macroblock. The macroblock activity is calculated as:

$$act_m = \sum_{i,j} |s(i,j) - c(i,j)| \qquad N_act_m = \frac{(2 \times act_j) + avg_act}{act_j + (2 \times avg_act)}$$

here, *i* is the horizontal position of the pixel in the current macroblock. *j* is the vertical position of the pixel in the current macroblock. $N_act_m$ is the activity of the current macroblock. $s(i,j)$ is the luma value of the original pixel($i$, $j$), $c(i, j)$ is the prediction value of pixel($i$, $j$). *avg_act* is the average $act_m$ in the previous coded picture which is coded with the same type as current picture. $act_m$ is the sum of the absolute difference after motion compensation or intra prediction.

When coding the first frame, the virtual buffer occupancy is initialized with:

$$d_0^i = 10 \times r/31$$

$$d_0^p = K_p \times d_0^i$$

$$d_0^b = K_b \times d_0^i$$

here $r$ is the virtual buffer size; $d_0^i$, $d_0^p$, and $d_0^b$ is the initial virtual buffer occupancy for i, p, or b frame. $K_p$ is the complexity ration between I and P frame; $K_b$ is the complexity ratio between I and B frame.

The RDO based rate control also includes a second RDO mode selection, after quantization parameter decision for the current macroblock. That is to say, the decided quantization parameter for the current macroblock will be used to do RDO mode selection again. The mode which minimizes the following expression will be selected as the mode for the current macroblock:

$$D(s,c,\ MODE|QP) + \lambda_{MODE}R(s,c,MODE|QP)$$

here, $s$ is the luma value of the original macroblock. $c$ is the luma value of the reconstructed macroblock. $\lambda_{MODE}$ is the lagrangian constant.

For I/P frame,

$$\lambda_{MODE} = 0.85 \times 2^{Q_{m-1}/3};$$

For B frame,

$$\lambda_{MODE} = 4 \times 0.85 \times 2^{Q_{m-1}/3} .$$

*D(s,c,MODE|QP)* is used to evaluate the distortion of the current macroblock after it is coded.
*R(s,c,MODE|QP)* is the bits used to code the macroblock with mode *MODE.*
*QP* is the quantization parameter for the current macroblock.

Quantization parameter from JVT processing module is sent back to JVT processing module, the macroblock is coded by JVT processing module and output.

Based on the above modules, the drawbacks of traditional rate control schemes are overcome. As RDO and rate control are considered together, the RDO based video coding can reach accurate target bitrate control while with good performance. The invention also provides an efficient way for rate control on JVT standard.

Figures:

Figure 1 is an apparatus for the invention.
Figure 2 is an implementation for the invention on the JVT encoder

Implementation Examples:

In the following parts, the invention is detailed through the figures and implementation examples.

Implementation Example 1:

A typical implementation for the invention is: assume the target bitrate for rate control is R, and frame rate is F, so the average frame size is R/F. Before coding a picture, the bits allocated to the current picture are adjusted according to the value of R/F; for I, P, B frame with different complexity, different bits will be allocated to guarantee the quality of decoded picture.
Do RDO mode selection for every macroblock in the picture while using the quantization parameter of previous macroblock. After the RDO mode selection, SAD (Sum of Absolute Difference) can be calculated from the residual after intra prediction or motion compensation. SAD can be used to denote the macroblock activity of the current macroblock. Then the quantization parameter for the current macroblock can be calculated according to the buffer occupancy and macroblock activity.
In the last, the above quantization parameter will be used to do a second RDO mode selection again.
As shown in Figure 1, the rate control scheme in this invention can be implemented in the following steps:

Step 1: Bit allocation. First does bit allocation for a GOP (Group of Picture), and adjust the bit allocation among the pictures in a GOP.
In this step, before coding a GOP, allocate bits for every picture in the GOP with the average picture size.
The average picture size is calculated as: *R*/*F* = *R*÷*F*, here, *R* is the target bit rate. *F* is the picture rate. *R*/*F* is the average picture size.
The bit allocation adjustment in the GOP is shown as follows:

$$T_i = \max\left\{ \frac{R}{1 + \frac{N_p X_p}{K_p X_i} + \frac{N_b X_b}{K_b X_i}}, \frac{bit_rate}{8 \times picture_rate} \right\}$$

$$T_b = \max\left\{\frac{R}{N_b + \frac{N_p K_b Xp}{K_p X_b}}, \frac{bit_rate}{8 \times picture_rate}\right\}$$

$$T_p = \max\left\{\frac{R}{N_p + \frac{N_b K_p X_b}{K_b X_p}}, \frac{bit_rate}{8 \times picture_rate}\right\}$$

here, $T_I$, $T_p$ and $T_b$ is the bits allocated to I, P or B frame respectively. $N_i$, $N_p$ and $N_b$ is the remained none coded I, P or B frames in the GOP respectively. $X_i$, $X_p$ and $X_b$ is the global complexity estimation for I, P or B frame respectively and is defined as the multiplier between the coded bits and average quantization parameter for the frame.

Before coding a GOP, the remaining bits for the current GOP is initialized as follows:

$$R = G + R_{prev}$$

$$G = bit_rate \times N \div picture_rate$$

here, $R$ is the remained bits for the current GOP.

$N$ is the number of frames in current GOP.

$G$ is the number of bits for a GOP.

$R_{prev}$ is the remained bits for the previous GOP. For the first GOP, $R_{prev}$=0.

*bit_rate* is the target bitrate.

*picture_rate* is the frame rate.

$X_i$, $X_p$ and $X_b$ are initialized as:

$$X_i = a \times bit_rate$$

$$X_p = b \times bit_rate$$

$$X_b = c \times bit_rate$$

here *a, b* and *c* are constants, and take the value of 100/115-160/115, 20/115-60/115, 10/115-42/115 respectively. *bit_rate* is the target bitrate.

Step 2: First RDO mode selection.

Do RDO mode selection for the current macroblock while using the quantization parameter of previous macroblock as a prediction value for the current macroblock. This is because the fluctuation in macroblock quantization parameter will affect the image quality, especially at low bit rate.

In this step, the mode minimizing the following expression is selected as the initial coding mode for the current macroblock:

$$D(s, c, MODE \mid QP) + \lambda_{MODE} R(s, c, MODE \mid QP)$$

here, $s$ is the luma value of the original macroblock. $c$ is the luma value of the reconstructed macroblock. $\lambda_{MODE}$ is the lagrangian constant.

For I/P frame,

$$\lambda_{MODE} = 0.85 \times 2^{Q_m - 1/3};$$

For B frame,

$$\lambda_{MODE} = 4 \times 0.85 \times 2^{Q_m - 1/3}.$$

*D(s,c,MODE|QP)* is used to evaluate the distortion of the current macroblock after it is coded.

*R(s,c,MODE|QP)* is the bits used to code the macroblock with mode *MODE.*

*QP* is the quantization parameter for current macroblock. For motion estimation in P or B frame, the motion vectors minimizing following expression are selected as the motion vectors for the current macroblock:

$$J(\mathrm{m},\lambda_{MOTION}) = SA(T)D(s,c(\mathrm{m})) + \lambda_{MOTION}\, R(\mathrm{m} - \mathrm{p})$$

here, *D(s,c(m))* is used to evaluate the distortion from motion compensation.

SA(T) D is sum of the absolute difference (or after Hadmard transform) for the macroblock.

*R(m-p)* is the bits used to code the motion vector.

*s* is the luma value of the current macroblock in the original frame.

*c* is the luma value in reference picture.

*m* is the motion vector.

*p* is the predicted motion vector.

$\lambda_{MOTION}$ is the lagrangian constant and $\lambda_{MOTION} = \sqrt{\lambda_{MODE}}$.

$\lambda_{MODE}$ is the lagrangian constant.

Step 3: Calculate the final quantization parameter for the current macroblock. First calculate the macroblock activity for the current macroblock, and then set up the virtual buffer model for mapping from virtual buffer occupancy to macroblock quantization parameter. Here, macroblock quantization parameter is decided by virtual buffer occupancy and macroblock activity.

In this step, it is implemented as follows:

After the first RDO mode selection, the final quantization parameter for the current macroblock should be decided; That is to say set up virtual buffer model and adjust the quantization parameter for the current macroblock according to its activity.

First, macroblock quantization parameter adjustment is implemented as: after the first RDO mode selection, the macroblock activity is calculated from the residual after intra prediction or motion compensation,

The macroblock activity is calculated as:

$$act_m = \sum_{i,j} |s(i,j) - c(i,j)| \qquad N_act_m = \frac{(2 \times act_j) + avg_act}{act_j + (2 \times avg_act)}$$

here, i is the horizontal position of the pixel in the current macroblock. $j$ is the vertical position of the pixel in the current macroblock. $N_act_m$ is the activity of the current macroblock. $s(i,j)$ is the luma value of the original pixel(i, $j$), $c(i, j)$ is the prediction value of pixel($i$, $j$). *avg_act* is the average $act_m$ in the previous coded picture which is coded with the same type as current picture. $act_m$ is the sum of the absolute difference after motion compensation or intra prediction.

Second, set up the virtual buffer model. The virtual buffer for rate control is set up for mapping the virtual buffer occupancy to macroblock quantization parameter. The macroblock quantization parameter is calculated as:

$$Q_m = \left( \frac{d_m^n \times 31}{r} \right) \times N_act_m$$

$$r = 2 \times bit_rate \,/\, picture_rate$$

$$d_m^n = d_0^n + B_{m-1} - T_n \times (m - 1)/MB_CNT$$

here, $Q_m$ is the quantization parameter of current macroblock.

$d_m^n$ is the current buffer occupancy, and it equals $d_m^I$, $d_m^p$, and $d_m^b$ for I, P, B frame respectively.

$B_{m-1}$ is the bits used to code previous macroblock.

$d_0^n$ is the initial buffer occupancy for current frame. *n* is i, p or b, corresponding to $d_0^i$, $d_0^p$, and $d_0^b$.

r is the size of virtual buffer occupancy.

The final buffer occupancy is $d_m^i$, $d_m^p$, $d_m^b$ for i, p, or b frame respectively, here *m=MB_CNT. MB_CNT* is the total number of macroblocks in a frame.

When coding the first frame, the buffer is initialized as:

$$d_0^i = 10 \times r / 31$$

$$d_0^p = K_p \times d_0^i$$

$$d_0^b = K_b \times d_0^i$$

here *r* is the virtual buffer size; $d_0^i$, $d_0^p$, and $d_0^b$ is the initial virtual buffer occupancy for i, p, or b frame. $K_p$ is the complexity ratio between I, P frame; $K_b$ is the complexity ratio between I and B frame.

Step 4: Second RDO mode selection. The quantization parameter calculated from Step 3 will be used to do the Step 2 again. Find the optimal coding mode for the current macroblock and quantize the macroblock and update the parameters.

The step is implemented as follows:

The final quantization parameter is used to do RDO mode selection for the current macroblock again; in this step, the mode minimizing the following expression is selected as the initial coding mode for the current macroblock:

$$D(s, c, MODE \mid QP) + \lambda_{MODE} R(s,c,MODE \mid QP)$$

here, *s* is the luma value of the original macroblock. *c* is the luma value of the reconstructed macroblock. $\lambda_{MODE}$ is the lagrangian constant.

For I/P frame,

$$\lambda_{MODE} = 0.85 \times 2^{Q_{m-1}/3};$$

For B frame,

$$\lambda_{MODE} = 4 \times 0.85 \times 2^{Q_{m-1}/3}.$$

*D(s,c,MODE|QP)* is used to evaluate the distortion of the current macroblock after it is coded.

*R(s,c,MODE|QP)* is the bits used to code the macroblock with mode *MODE.*

*QP* is the quantization parameter for current macroblock. For motion estimation in P or B frame, the motion vectors minimizing following expression are selected as the motion vectors for the current macroblock:

$$J(m,\lambda_{MOTION}) = SA(T)D(s,c(m)) + \lambda_{MOTION}\, R(m - p)$$

here, *D(s,c(m))* is used to evaluate the distortion from motion compensation.

SA(T) D is the sum of the absolute difference (or after Hadmard transform) for the macroblock.

*R(m-p)* is the bits used to code the motion vector.

*s* is the luma value of the current macroblock in the original frame.

*c* is the luma value in reference picture.

*m* is the motion vector.

*p* is the predicted motion vector.

$\lambda_{MOTION}$ is the lagrangian constant and $\lambda_{MOTION} = \sqrt{\lambda_{MODE}}$.

$\lambda_{MODE}$ is the lagrangian constant.

Implementation Example 2: In figure 2, an implementation of the invention on JVT standard is shown. In the implementation, the input is raw video data, and the output is the coded bitstream. The block surrounded by virtual line is JVT encoder module. The apparatus is composed of JVT processing module 4, RDO mode selection module 1, virtual buffer module 2, and global complexity estimation module 3; here, JVT processing module 4 accepts the input data, and is connected with RDO mode selection module 1, virtual buffer module 2, and global complexity estimation module 3;

The RDO model selection module 1 is connected with virtual buffer module 2 and global complexity module 3. Its input is from JVT processing module 4, and processes the input signal based on the virtual buffer module 2 and global complexity estimation module 3, and then send the output signal to JVT processing module 4. After the JVT processing module 4, the final quantization parameter is output.

The above bit allocation is done as: First does bit allocation for a GOP (Group of Picture), and adjust the bit allocation among the pictures in a GOP. In this step, before coding a GOP, allocate bits for every picture in the GOP with the average picture size.

The average picture size is calculated as: *R*/*F* = *R*÷*F*, here, *R* is the target bit rate. *F* is the picture rate. *R*/*F* is the average picture size.

The bit allocation adjustment in a GOP is shown as follows:

$$T_i = \max\left\{ \frac{R}{1 + \frac{N_p X_p}{K_p X_i} + \frac{N_b X_b}{K_b X_i}}, \frac{bit_rate}{8 \times picture_rate} \right\}$$

$$T_b = \max\left\{ \frac{R}{N_b + \frac{N_p K_b Xp}{K_p X_b}}, \frac{bit_rate}{8 \times picture_rate} \right\}$$

$$T_p = \max\left\{\frac{R}{N_p + \frac{N_b K_p X_b}{K_b X_p}}, \frac{bit_rate}{8 \times picture_rate}\right\}$$

here, $T_I$, $T_p$ and $T_b$ is the bits allocated to I, P or B frame respectively. $N_i$, $N_p$ and $N_b$ is the remained none coded I, P or B frames in the GOP respectively. $X_i$, $X_p$ and $X_b$ is the global complexity estimation for I, P or B frame respectively and is defined as the multiplier between the coded bits and average quantization parameter for the frame.

*bit_rate* is the target bit rate. *picture_rate* is the frame rate.

$K_p$ and $K_b$ are constants. $K_p$, $K_b$ means the complexity ratio between P, B frame and I frame respectively.

$R$ is the remained bits for the GOP, and after coding a picture it is updated as follows:

$$R = R - S_{i,p,b}$$

$S_{i,p,b}$ is the coded bits for the current frame.

Before coding a GOP, the remaining bits for the current GOP is initialized as follows:

$$R = G + R_{prev}$$

$$G = bit_rate \times N \div picture_rate$$

here, $R$ is the remained bits for the current GOP. $N$ is the number of frames in current GOP.

$G$ is the number of bits for a GOP.

$R_{prev}$ is the remained bits for the previous GOP. For the first GOP, $R_{prev}=0$.

*bit_rate* is the target bitrate.

*picture_rate* is the frame rate.

$X_i$, $X_p$ and $X_b$ are initialized as:

$$X_i = a \times bit_rate$$

$$X_p = b \times bit_rate$$

$$X_b = c \times bit_rate$$

here *a, b* and *c* are constants and take the value of 100/115-160/115, 20/115-60/115, 10/115-42/115 respectively;

*bit_rate* is the target bitrate.

The said RDO mode selection module will select the optimal mode for the current macroblock while using the quantization parameter of previous macroblock as a prediction value for the current macroblock. The mode minimizing the following expression is selected as the initial coding mode for the current macroblock:

$$D(s, c, MODE \mid QP) + \lambda_{MODE} R(s, c, MODE \mid QP)$$

here, $s$ is the luma value of the original macroblock. $c$ is the luma value of the reconstructed macroblock. $\lambda_{MODE}$ is the lagrangian constant.

For I/P frame,

$$\lambda_{MODE} = 0.85 \times 2^{Q_{m-1}/3};$$

For B frame,

$$\lambda_{MODE} = 4 \times 0.85 \times 2^{Q_{m-1}/3}.$$

*D(s,c,MODE|QP)* is used to evaluate the distortion of the current macroblock after it is coded.

*R(s,c,MODE|QP)* is the bits used to code the macroblock with mode *MODE.*

*QP* is the quantization parameter for current macroblock. For motion estimation in P or B frame, the motion vectors minimizing following expression are selected as the motion vectors for the current macroblock:

$$J(m,\lambda_{MOTION}) = SA(T)D(s,c(m)) + \lambda_{MOTION} R\,(m - p)$$

here, *D(s,c(m))* is used to evaluate the distortion from motion compensation.
SA(T) D is sum of the absolute difference (or after Hadmard transform) for the macroblock.
*R(m-p)* is the bits used to code the motion vector.
*s* is the luma value of the current macroblock in the original frame.
*c* is the luma value in reference picture.
*m* is the motion vector.
*p* is the predicted motion vector.
$\lambda_{MOTION}$ is the lagrangian constant and $\lambda_{MOTION} = \sqrt{\lambda_{MODE}}$.
$\lambda_{MODE}$ is the lagrangian constant.
After first RDO mode selection done in RDO mode selection module 1, the output is sent to JVT processing module 4 and set up the virtual buffer model and adjust the quantization parameter for the current macroblock according to the macroblock activity.
For quantization parameter adjustment for the macroblcok, after first RDO mode selection, the SAD calculated from the residual after intra prediction or motion compensation is used to denote the macroblock activity for the current macroblock.

The macroblock activity is calculated as:

$$act_m = \sum_{i,j} |s(i,j) - c(i,j)| \qquad N_act_m = \frac{(2 \times act_j) + avg_act}{act_j + (2 \times avg_act)}$$

here, *i* is the horizontal position of the pixel in the current macroblock. *j* is the vertical position of the pixel in the current macroblock. $N_act_m$ is the activity of the current macroblock. *s*(*i,j*) is the luma value of the original pixel(*i,j*), *c* (*i,j*) is the prediction value of pixel(*i,j*). *avg_act* is the average $act_m$ in the previous coded picture which is coded with the same type as current picture. $act_m$ is the sum of the absolute difference after motion compensation or intra prediction. The said virtual buffer model is used to mapping buffer occupancy to macroblock quantization parameter. The macroblock quantization parameter is calculated as:

$$Q_m = \left( \frac{d_m^n \times 31}{r} \right) \times N_act_m$$

$$r = 2 \times bit_rate \,/\, picture_rate$$

$$d_m^n = d_0^n + B_{m-1} - T_n \times (m - 1) / MB_CNT$$

here, $Q_m$ is the quantization parameter of current macroblock.

$d_m^n$ is the current buffer occupancy, and it equals $d_m^I, d_m^p$, and $d_m^b$ for I, P, B frame respectively.

$B_{m-1}$ is the bits used to code previous macroblock.

$d_0^n$ is the initial buffer occupancy for current frame. $n$ is i,p or b, corresponding to $d_0^i, d_0^p$, and $d_0^b$.

$r$ is the size of virtual buffer occupancy.

The final buffer occupancy is $d_m^i$ $d_m^p$, $d_m^b$ for i, p, or b frame respectively, here $m=MB_CNT$. $MB_CNT$ is the total number of macroblocks in a frame.

When coding the first frame, the buffer is initialized as:

$$d_0^i = 10 \times r/31$$

$$d_0^p = K_p \times d_0^i$$

$$d_0^b = K_b \times d_0^i$$

here $r$ is the virtual buffer size; $d_0^i$, $d_0^p$, and $d_0^b$ is the initial virtual buffer occupancy for i, p, or b frame. $K_p$ is the complexity ratio between I and P frame; $K_b$ is the complexity ratio between I and B frame.

After final quantization parameter decision for the current macroblock, the output from JVT processing module 4 is sent to RDO mode selection module 1 for RDO mode selection. In the RDO mode selection module, a second RDO mode selection is executed again. The final quantization parameter for the current macroblock is used to do RDO mode selection; the mode minimizing the following expression is selected as the initial coding mode for the current macroblock:

$$D(s, c, MODE\,|QP) + \lambda_{MODE} R(s,c,MODE|QP)$$

here, $s$ is the luma value of the original macroblock. $c$ is the luma value of the reconstructed macroblock. $\lambda_{MODE}$ is the lagrangian constant.

For I/P frame,

$$\lambda_{MODE} = 0.85 \times 2^{Q_{m-1}/3};$$

For B frame,

$$\lambda_{MODE} = 4 \times 0.85 \times 2^{Q_{m-1}/3}.$$

$D(s,c,MODE|QP)$ is used to evaluate the distortion of the current macroblock after it is coded.

$R(s,c,MODE|QP)$ is the bits used to code the macroblock with mode $MODE$.

$QP$ is the quantization parameter for current macroblock. For motion estimation in P or B frame, the motion vectors minimizes following expression are selected as the motion vectors for the current macroblock:

$$J(\mathrm{m},\lambda_{MOTION}) = SA(T)D(s,c(\mathrm{m})) + \lambda_{MOTION}\, R(\mathrm{m} - \mathrm{p})$$

here, $D(s,c(m))$ is used to evaluate the distortion from motion compensation.

SA(T) D is sum of the absolute difference (or after Hadmard transform) for the macroblock.

*R(m-p)* is the bits used to code the motion vector.
*s* is the luma value of the current macroblock in the original frame.
*c* is the luma value in reference picture.
*m* is the motion vector.
*p* is the predicted motion vector.
$\lambda_{MOTION}$ is the lagrangian constant and $\lambda_{MOTION} = \sqrt{\lambda_{MODE}}$.
$\lambda_{MODE}$ is the lagrangian constant.

In the last, RDO mode selection moduel 1 calculates a final quantization parameter based on input from virtual buffer module 2 and global complexity estimation module 3. The final quantization parameter is sent back to JVT processing module 4, and the macroblock is coded by JVT module and output.

In sum, RDO mode selection module 1 is used to calculate the quantization paramete for the current macroblock. Its input is the buffer occupancy, macroblock activity and global complexity estimation of a picture and its output is the quantization parameter for the current macroblock.

Virtual buffer module 2 is used to calculate the current buffer occupancy. Its input is the coded bits of previous macroblock and its output is the buffer occupancy for current macroblcok.

Global complexity module 3 is used to calculate the global complexity estimation of the picture. Its input is the coded bits and average quantization parameter of previous frame, and its output is the global complexity estimation of previous coded frame.

In figure 2, JVT processing module 4 processes every macroblock in the current picture. First select the optimal mode for the current macroblock. If the macroblock mode is intra macroblock, the switch S is connected with S1 and adder al does intra prediction. Then DCT and quantization is done on the macroblock coefficients after prediction. In the last, the quantized coeffients are coded. At the same time, JVT processing module 4 does inverse quantization, inverse DCT, and reconstruction. After reconstruction, the frame is filtered and sent back to reference frame buffer. The reconstructed frame will be used as reference frame in the future. If the macroblock is inter coded, the switch S is connected with S2. For inter mode, motion estimation is done first, and then motion compensation, DCT, quantization, inverse quantization, inverse DCT. Reconstruction is done at adder 2. Then the frame is filtered and sent to frame buffer. After intra prediction or motion compensation, the macroblock activity can be calculated and sent to RDO mode selection module 1 to decide the final quantization parameter for the current macroblock. Then JVT processing module 4 does mode selection and coding according to the quantization parameter calculated by rate control.

In the last, it should be pointed out that, the above implementation illustration is just only an example, but not all. Those technical engineers in this field should understand this, and can exchange or replace some things in the invention equally, but that doesn't exceed the range of the invention, and should also have been protected in the invention.

**Claims**

1. the characteristics of the RDO based rate control scheme include:

    Step 1: Does bit allocation for every picture in a GOP;
    Step 2: Does rate distortion mode selection for every macroblock in the picture and calculate a quantization parameter for rate control.

2. as claim 1 has said, in step 1, before coding a GOP, does bit allocation for the pictures in the GOP with the average picture size;

3. as claim 2 has said, the average picture size is calculated as:
    $R/F = R \div F$, here, $R$ is the target bit rate. $F$ is the picture rate; $R/F$ is the average picture size.

4. as claim 1 and claim 2 have said, does bit allocation adjustment in the coded GOP, shown as follows:

$$T_i = \max\left\{\frac{R}{1+\frac{N_p X_p}{K_p X_i}+\frac{N_b X_b}{K_b X_i}}, \frac{bit_rate}{8\times picture_rate}\right\}$$

$$T_p = \max\left\{\frac{R}{N_p+\frac{N_b K_p X_b}{K_b X_p}}, \frac{bit_rate}{8\times picture_rate}\right\}$$

$$T_b = \max\left\{\frac{R}{N_b+\frac{N_p K_b X_p}{K_p X_b}}, \frac{bit_rate}{8\times picture_rate}\right\}$$

here, $T_I$, $T_p$ and $T_b$ is the bits allocated to the I, P or B frame respectively; $N_i$, $N_p$ and $N_b$ is the remained none coded I, P or B frames in the GOP respectively; $X_i$, $X_p$ and $X_b$ is the global complexity estimation for the I, P or B frame respectively and is defined as the multiplier between coded bits and average quantization parameter for the frame;

*bit_rate* is the target bit rate; *picture_rate* is the frame rate;

$K_p$ and $K_b$ are constants; $K_p$, $K_b$ means the complexity ratio between P, B frame and I frame respectively;

*R* is the remained bits for the GOP, and after coding a picture it is updated as follows:

$$R = R - S_{i,p,b}$$

$S_{i,p,b}$ is the coded bits for the current frame.

**5.** as claim 4 has said, before coding a GOP, the remaining bits for the current GOP is initialized as follows:

$$R = G + R_{prev}$$

$$G = bit_rate \times N \div picture_rate$$

here, *R* is the remained bits for the current GOP;
*N* is the number of frames in the current GOP;
*G* is the number of bits for a GOP;
$R_{prev}$ is the remained bits for the previous GOP; For the first GOP, $R_{prev}$=0;

**6.** as claim 4 has said, $X_i$, $X_p$ and $X_b$ are initialized as:

$$X_i = a \times bit_rate$$

$$X_p = b \times bit_rate$$

$$X_b = c \times bit_rate$$

here *a, b* and c are constants;
*bit_rate* is the target bitrate.

**7.** as claim 1 has said, Step 1 also includes at least one time rate distortion optimization based mode selection with a predicted quantization parameter; The predicted quantization parameter may be the quantization parameter of the previous macroblock or decided by rate distortion model in a rate control scheme. The mode minimizing the following expression is selected as the initial coding mode for the current macroblock:

$$D(s, c, MODE \mid QP) + \lambda_{MODE} R(s,c,MODE \mid QP)$$

here, $s$ is the luma value of the original macroblock. $c$ is the luma value of the reconstructed macroblock. $\lambda_{MODE}$ is the lagrangian constant;
For I/P frame,

$$\lambda_{MODE} = 0.85 \times 2^{Q_{m-1}/3};$$

For B frame,

$$\lambda_{MODE} = 4 \times 0.85 \times 2^{Q_{m-1}/3};$$

$D(s,c,MODE|QP)$ is used to evaluate the distortion of the current macroblock after it is coded with mode *MODE;*
$R(s,c,MODE|QP)$ is the bits used to code the macroblock with mode *MODE;*
$QP$ is the quantization parameter for the current macroblock.

**8.** as claim 7 has said, for motion estimation in P or B frame, the motion vector minimizing following expression is selected as the motion vector for the current macroblock:

$$J(m,\lambda_{MOTION}) = SA(T)D(s,c(m)) + \lambda_{MOTION} R(m - p)$$

here, $D(s,c(m))$ is used to evaluate the distortion from motion compensation;
$SA(T)D$ is the sum of the absolute difference after prediction (or after Hadmard transform) for the macroblock;
$R(m-p)$ is the bits used to code the motion vector;
$s$ is the luma value of the current macroblock in the original frame;
$c$ is the luma value in reference picture;
$m$ is the motion vector;
$p$ is the predicted motion vector;
$\lambda_{MOTION}$ is the lagrangian constant and $\lambda_{MOTION} = \sqrt{\lambda_{MODE}}$;
$\lambda_{MODE}$ is the lagrangian constant.

**9.** as claim 8 has said, after the first rate distortion mode selection, the RDO based rate control further includes: calculating quantization parameter for the current macroblock; The quantization parameter is adjusted according to the macroblock activity and buffer status.

**10.** as claim 9 has said, the quantization parameter for the macroblock is adjusted according to the macroblock activity; After the first rate distortion mode selection, the sum of the absolute difference is used as the macroblock activity estimation; The macroblock activity is calculated as:

$$act_m = \sum_{i,j} |s(i,j) - c(i,j)| \quad N_act_m = \frac{(2 \times act_j) + avg_act}{act_j + (2 \times avg_act)}$$

here, $i$ is the horizontal position of the pixel in the current macroblock; $j$ is the vertical position of the pixel in the current macroblock; $N_act_m$ is the activity of the current macroblock; $s(i,j)$ is the luma value of the original pixel $(i, j)$; $c(i, j)$ is the prediction value of pixel$(i, j)$; $avg_act$ is the average $act_m$ in the previous coded picture which is coded with the same type as current picture; $act_m$ is the sum of the absolute difference after motion compensation or intra prediction.

**11.** as claim 9 has said, a virtual buffer is used to do rate control. First set up the mapping from the virtual buffer occupancy to macroblock quantization parameter, and the final macroblock quantization parameter is calculated as:

$$Q_m = \left( \frac{d_m^n \times 31}{r} \right) \times N_act_m$$

$$d_m^n = d_0^n + B_{m-1} - T_n \times (m-1)/MB_CNT$$

$$r = 2 \times bit_rate \,/\, picture_rate$$

here, $Q_m$ is the quantization parameter of current macroblock;

$d_m^n$ is the current buffer occupancy, and it equals $d_m^I$,$d_m^p$, and $d_m^b$ for I, P, B frame respectively;

$B_{m-1}$ is the bits used to code previous macroblock;

$d_0^n$ is the initial buffer occupancy for current frame. $n$ is i,p or b, corresponding to $d_0^i$,$d_0^p$, and $d_0^b$;

$r$ is the size of virtual buffer;

**12.** as Claim 11 said, when coding the first frame, the virtual buffer occupancy is initialized with:

$$d_0^b = K_b \times d_0^i$$

$$d_0^i = 10 \times r \,/\, 31$$

$$d_0^p = K_p \times d_0^i$$

here $r$ is the virtual buffer size; $d_0^i d_0^p$, and $d_0^b$ is the initial virtual buffer occupancy for i, p, or b frame; $K_p$ is the complexity ratio between I, P frame; $K_b$ is the complexity ratio between I, B frame.

**13.** as claim 9, 10, 11 and 12 have said, the RDO based rate control also includes a second RDO mode selection, after calculating the final quantization parameter for the current macroblock; That is to say, the selected quantization parameter for the current macroblock will be used to do RDO mode selection again; The mode which minimizes the following expression will be selected as the coding mode for the current macroblock:

$$D(s,c,MODE|QP) + \lambda_{MODE}\, R(s,c,MODE|QP)$$

here, $s$ is the luma value of the original macroblock. $c$ is the luma value of the reconstructed macroblock. $\lambda_{MODE}$ is the lagrangian constant;

For I/P frame,

$$\lambda_{MODE} = 0.85 \times 2^{Q_{m-1}/3};$$

For B frame,

$$\lambda_{MODE} = 4 \times 0.85 \times 2^{Q_{m-1}/3};$$

$D(s,c,MODE|QP)$ is used to evaluate the distortion of the current macroblock coded with mode *MODE*;
$R(s,c,MODE|QP)$ is the bits used to code the macroblock with mode *MODE;*
*QP* is the quantization parameter for the current macroblock.

**14.** as claim 13 has said, for motion estimation in P or B frame, the motion vector minimizing following expression is selected for the current macroblock:

$$J(m,\lambda_{MOTION}) = SA(T)D(s,c(m) + \lambda_{MOTION}\ R(m - p)$$

here, $D(s,c(m))$ is used to evaluate the distortion from motion compensation;
*SA(T) D* is the sum of the absolute difference (or after Hadmard transform) for the macroblock;
$R(m-p)$ is the bits used to code the motion vector;
$s$ is the luma value of the current macroblock in the original frame;
$c$ is the luma value in reference picture;
$m$ is the motion vector;
$p$ is the predicted motion vector;
$\lambda_{MOTION}$ is the lagrangian constant and $\lambda_{MOTION}=\sqrt{\lambda_{MODE}}$;
$\lambda_{MODE}$ is the lagrangian constant.

**15.** a rate distortion optimization based rate control implementation includes following modules: a video coding encoder module (for example, H.264 encoder module or JVT processing module), rate distortion optimization mode selection and adaptive quantization module, virtual buffer, and global complexity estimation module; here, JVT processing module receives the input frame, and it is connected with RDO mode selection module, virtual buffer module and global complexity estimation module;

RDO mode selection module and adaptive quantization is connected with virtual buffer and global complexity estimation module; It receives the input signal from JVT processing module, and processes it based on the virtual buffer module and global complexity module status, and then calculate the quantization parameter for the macroblock; In the last, JVT processing module will output the final coded macroblock with the calculated parameter.

**16.** as claim 15 has said, before coding a GOP, does bit allocation for the pictures in the GOP with the average picture size;

**17.** as claim 16 said, the average picture size is calculated as:

$R/F = R \div F$, here, $R$ is the target bit rate. $F$ is the picture rate. $R/F$ is the average picture size.

**18.** as claim 16 and 17 have said, does bit allocation adjustment in the GOP; The adjustment is shown as follows:

$$T_i = \max\left\{\frac{R}{1+\frac{N_p X_p}{K_p X_i}+\frac{N_b X_b}{K_b X_i}}, \frac{bit_rate}{8\times picture_rate}\right\}$$

$$T_b = \max\left\{\frac{R}{N_b+\frac{N_p K_b Xp}{K_p X_b}}, \frac{bit_rate}{8\times picture_rate}\right\}$$

$$T_p = \max\left\{\frac{R}{N_p+\frac{N_b K_p X_b}{K_b X_p}}, \frac{bit_rate}{8\times picture_rate}\right\}$$

here, $T_b$, $T_p$ and $T_b$ is the bits allocated to I, P or B frame respectively; $N_i$, $N_p$ and $N_b$ is the remained none coded I, P or B frames in the GOP respectively; $X_i$, $X_p$ and $X_b$ is the global complexity estimation for the I, P or B frame respectively and is defined as the multiplier between the coded bits and average quantization parameter for the frame;

*bit_rate* is the target bit rate. *picture_rate* is the frame rate;

$K_p$ and $K_b$ are constants. $K_p$, $K_b$ means the complexity ratio between P,B frame and I frame respectively;

$R$ is the remained bits for the GOP, and after coding a picture it is updated as follows:

$R = R\text{-}S_{i,p,b}$

$S_{i,p,b}$ is the coded bits for the current frame.

**19.** as Claim 18 has said, before coding a GOP, the remaining bits for the current GOP is initialized as follows:

$$R = G + R_{prev}$$

$$G = bit_rate \times N \div picture_rate$$

here, $R$ is the remained bits for the current GOP;

$N$ is the number of frames in current GOP;

$G$ is the number of bits for a GOP;

$R_{prev}$ is the remained bits for the previous GOP; For the first GOP, $R_{prev}$=0.

**20.** as claim 18 said, $X_i$, $X_p$ and $X_b$ are initialized as:

$$X_i = a \times bit_rate$$

$$X_p = b \times bit_rate$$

$$X_b = c \times bit_rate$$

here *a, b* and *c* are constants, and take the value 100/115-160/115, 20/115-60/115, 10/115-42/115 respectively;

*bit_rate* is the target bitrate.

**21.** as claim 15 said, does the mode selection while using the quantization parameter of previous macroblock as a prediction value for the current macroblock; The mode minimizing the following expression is selected as the initial coding mode for the current macroblock:

$$D(s, c, MODE \mid QP) + \lambda_{MODE} R(s,c,MODE \mid QP)$$

here, *s* is the luma value of the original macroblock; c is the luma value of the reconstructed macroblock; $\lambda_{MODE}$ is the lagrangian constant;

For I/P frame,

$$\lambda_{MODE} = 0.85 \times 2^{Q_{m-1}/3};$$

For B frame,

$$\lambda_{MODE} = 4 \times 0.85 \times 2^{Q_{m-1}/3};$$

*D(s,c,MODE|QP)* is used to evaluate the distortion of the current macroblock coded with mode *MODE;*

*R(s,c,MODE|QP)* is the bits used to code the macroblock with mode *MODE;*

*QP* is the quantization parameter for the current macroblock.

**22.** as claim 21 has said, for motion estimation in P or B frame, the motion vector minimizing following expression is selected for the current macroblock:

$$J(m,\lambda_{MOTION}) = SA(T)D(s,c(m)) + \lambda_{MOTION} R(m - p)$$

here, *D(s,c(m))* is used to evaluate the distortion from motion compensation;

*SA(T) D* is sum of the absolute difference (or after Hadmard transform) for the macroblock;

*R(m-p)* is the bits used to code the motion vector;

*s* is the luma value of the current macroblock in the original frame;

*c* is the luma value in reference picture;

*m* is the motion vector;

*p* is the predicted motion vector;

$\lambda_{MOTION}$ is the lagrangian constant and $\lambda_{MOTION} = \sqrt{\lambda_{MODE}}$;

$\lambda_{MODE}$ is the lagrangian constant.

**23.** as claim 22 has said, after the first rate distortion mode selection, the rate control scheme further includes: Calculating a new quantization parameter and adjusting it according to the macroblock activity and buffer status.

**24.** as claim 22 said, for adjusting quantization parameter of the current macroblock, the sum of the absolute difference is used to denote the macroblock activity after first rate distortion mode selection. The macroblock activity is calculated as:

$$act_m = \sum_{i,j} |s(i,j) - c(i,j)| \qquad N_act_m = \frac{(2 \times act_j) + avg_act}{act_j + (2 \times avg_act)}$$

here, $i$ is the horizontal position of the pixel in the current macroblock; $j$ is the vertical position of the pixel in the current macroblock; $N_act_m$ is the activity of the current macroblock; $s(i,j)$ is the luma value of the original pixel $(i,j)$, $c(i, j)$ is the prediction value of pixel$(i,j)$; $avg_act$ is the average $act_m$ in the previous coded picture which is coded with the same type as current picture; $act_m$ is the sum of the absolute difference after motion compensation or intra prediction.

**25.** as claim 22 has said, a virtual buffer is used to do rate control; First set up the mapping from the virtual buffer occupancy to macroblock quantization parameter; The macroblock quantization parameter is calculated as:

$$Q_m = \left( \frac{d_m^n \times 31}{r} \right) \times N_act_m$$

$$r = 2 \times bit_rate \,/\, picture_rate$$

$$d_m^n = d_0^n + B_{m-1} - T_n \times (m-1)/MB_CNT$$

here, $Q_m$ is the quantization parameter of current macroblock;

$d_m^n$ is the current buffer occupancy, and it equals $d_m^I, d_m^P$, and $d_m^b$ for I, P, B frame respectively;

$B_{m-1}$ is the bits used to code previous macroblock;

$d_0^n$ is the initial buffer occupancy for current frame. $n$ is i,p or b, corresponding to $d_0^i, d_0^p$,and $d_0^b$;

$r$ is the size of virtual buffer occupancy.

**26.** as claim 25 said, when coding the first frame, the virtual buffer occupancy is initialized with:

$$d_0^i = 10 \times r / 31$$

$$d_0^p = K_p \times d_0^i$$

$$d_0^b = K_b \times d_0^i$$

here $r$ is the virtual buffer size; $d_0^i, d_0^p$, and $d_0^b$ is the initial virtual buffer occupancy for i, p, or b frame; $Kp$ is the complexity ratio between I, P frame; $K_b$ is the complexity ratio between I,B frame.

**27.** as claim 23, 24, 25, and 26 have said, the RDO based rate control also includes a second RDO mode selection, after quantization parameter decision for the current macroblock; That is to say, the decided quantization parameter for the current macroblock will be used to do RDO mode selection again; The mode which minimizes the following expression will be selected as coding mode for the current macroblock:

$$D(s,c,MODE|QP) + \lambda_{MODE} R(s,c,MODE|QP)$$

here, $s$ is the luma value of the original macroblock; $c$ is the luma value of the reconstructed macroblock; $\lambda_{MODE}$ is the lagrangian constant;

For I/P frame,

$$\lambda_{MODE} = 0.85 \times 2^{Q_{m-1}/3};$$

For B frame,

$$\lambda_{MODE} = 4 \times 0.85 \times 2^{Q_{m-1}/3}.$$

*D(s,c,MODE|QP)* is used to evaluate the distortion of the current macroblock after it is coded;
*R(s,c,MODE|QP)* is the bits used to code the macroblock with mode *MODE;*
*QP* is the quantization parameter for current macroblock.

**28.** as claim 27 said, for motion estimation in P or B frame, the motion vectors minimizes following expression are selected as the motion vectors for the current macroblock:

$$J(\mathrm{m},\lambda_{MOTION}) = SA(T)D(s,c(\mathrm{m})) + \lambda_{MOTION}\, R(\mathrm{m - p})$$

here, *D(s,c(m))* is used to evaluate the distortion from motion compensation;
*SA(T) D* is sum of the absolute difference (or after Hadmard transform) for the macroblock;
*R(m-p)* is the bits used to code the motion vector;
*s* is the luma value of the current macroblock in the original frame;
*c* is the luma value in reference picture;
*m* is the motion vector;
*p* is the predicted motion vector;
$\lambda_{MOTION}$ is the lagrangian constant and $\lambda_{MOTION}=\sqrt{\lambda_{MODE}}$ ;
$\lambda_{MODE}$ is the lagrangian constant.

**29.** as Claim 28 said, quantization parameter from RDO and adaptive quantization module is sent back to JVT processing module, the macroblock is coded by JVT processing module and output.

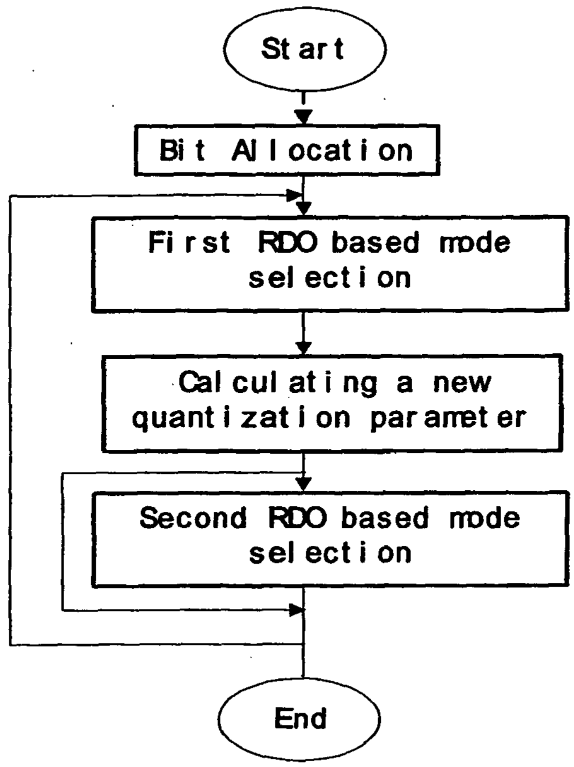


Figure 1 is an apparatus for the invention.

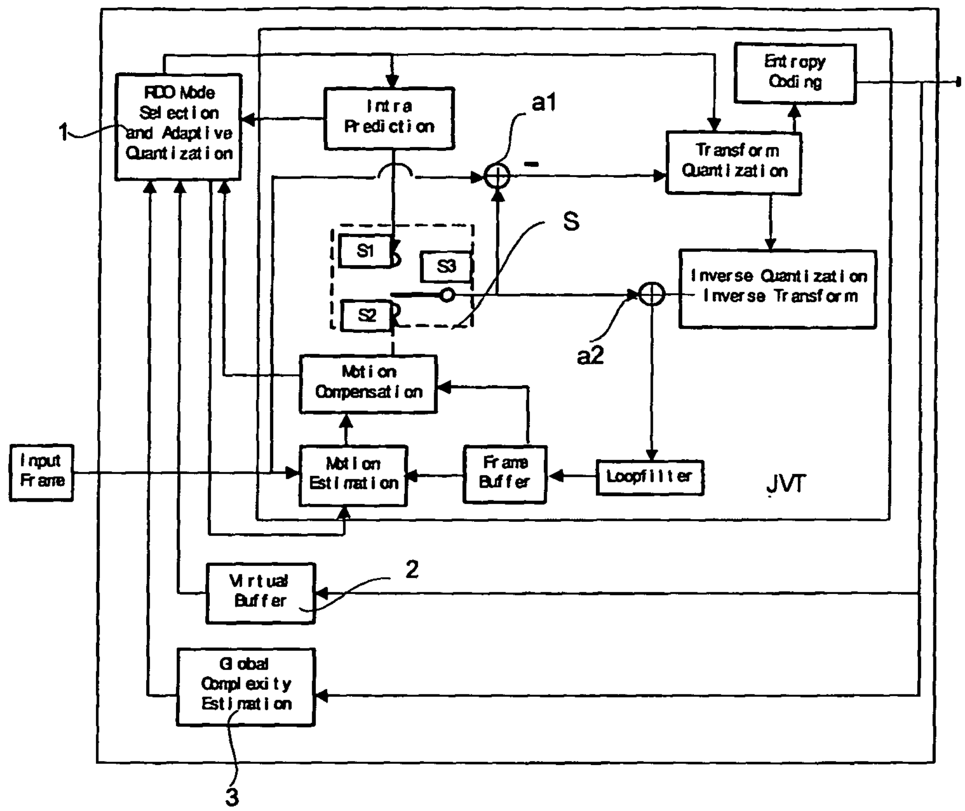


Figure 2 is an implementation of the invention on the JVT encoder

# INTERNATIONAL SEARCH REPORT

International application No. PCT/CN02/00673

A. CLASSIFICATION OF SUBJECT MATTER

IPC$^7$ H04N7/26

According to International Patent Classification (IPC) or to both national classification and IPC

B. FIELDS SEARCHED

Minimum documentation searched (classification system followed by classification symbols)

IPC$^7$ H04N7/26

Documentation searched other than minimum documentation to the extent that such documents are included in the fields searched

Electronic data base consulted during the international search (name of data base and, where practicable, search terms used)

WPI,EPODOC,PAJ,CNPAT:RATE,DISTORTION,QUANTIZATION,ALLOCATION

C. DOCUMENTS CONSIDERED TO BE RELEVANT

| Category* | Citation of document, with indication, where appropriate, of the relevant passages | Relevant to claim No. |
|---|---|---|
| A | WO0049570A1(UNISEARCH LTD)<br>24.Aug.2000（24.08.00）, the whole document | 1-29 |
| A | US5778192A(MOTOROLA INC;UNIV NORTHWESTERN)<br>07.Jul.1998（07.07.98）, the whole document | 1-29 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim (S) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| | |
|---|---|
| Date of the actual completion of the international search<br>10.Dec.2002（10.12.02） | Date of mailing of the international search report<br>30 JAN 2003 (30.01.03) |
| Name and mailing address of the ISA/CN<br>6 Xitucheng Rd., Jimen Bridge, Haidian District,<br>100088 Beijing, China<br>Facsimile No. 86-10-62019451 | Authorized officer<br>Wei,Wei<br>Telephone No. (86-10)62093804 |

Form PCT/ISA /210 (second sheet) (July 1998)

**INTERNATIONAL SEARCH REPORT**
Information on patent family members

International application No.
PCT/CN02/00673

| Patent Document Cited in Search Report | Publication Date | Patent Family Member(s) | Publication Date |
|---|---|---|---|
| WO0049570A1 | 24.08.00 | AU2784200A | 04.09.00 |
| US5778192A | 07.07.98 | None | None |

Form PCT/ISA/210 (patent family annex) (July 1998)